# EUROPEAN PATENT APPLICATION

(11) **EP 2 093 920 A1**
(43) Date of publication of application: **26.08.2009**
(21) Application number: 07832598.2
(22) Date of filing: 27.11.2007
(51) Int. Cl.: H04L 1/08, H04L 1/00, H04N 7/173, H04N 7/26

(54) **MEDIA TRANSMISSION/RECEPTION METHOD, MEDIA TRANSMISSION METHOD, MEDIA RECEPTION METHOD, MEDIA TRANSMISSION/RECEPTION DEVICE, MEDIA TRANSMISSION DEVICE, MEDIA RECEPTION DEVICE, GATEWAY DEVICE, AND MEDIA SERVER**

(30) Priority: 11.12.2006 JP 2006333708
(71) Applicant: NEC Corporation, Minato-ku Tokyo 108-8001 (JP)
(72) Inventor: OZAWA, Kazunori, Tokyo 108-8001 (JP)
(74) Representative: Vossius & Partner
(86) International application number: PCT/JP2007/072873
(87) International publication number: WO 2008/072469

(57) **Abstract**

There is provided a media transmitting/receiving method, a media transmitting method, a media receiving method, a media transmitting/receiving apparatus, a media transmitting apparatus, a media receiving apparatus, a gateway apparatus, and a media server apparatus, for preventing media quality degradation caused by packet loss. They comprise a connection call processing unit for exchanging settings of encoded data and redundant data stored in each packet, and a setting of at least any one of encoding bit rates of a sound encoding unit and a redundant data generating unit, between the media transmitting/receiving apparatus, and a sound decoding unit for decoding at least any one of the encoded data and the redundant data based on the setting of the encoding bit rate exchanged between the media transmitting/receiving apparatuses, wherein the encoded data and the redundant data are separated from each packet based on the setting of the data stored in the packets exchanged between the media transmitting/receiving apparatuses, and lost encoded data is compensated with the redundant data, and thereby degradation of the media quality is prevented even when the packet loss occurs in transferring media encoded data in the packets via an IP network.

## Description

### TECHNICAL FIELD

The present invention relates to methods and apparatuses for transmitting and receiving encoded media data (for example, sound, video image, and the like) by means of packets, and relates to a media transmitting/receiving method, a media transmitting method, a media receiving method, a media transmitting/receiving apparatus, a media transmitting apparatus, a media receiving apparatus, a gateway apparatus, and a media server, each capable of transmitting the data while preventing degradation of media quality even when a packet loss occurs.

### BACKGROUND ART

Methods for compressing and transmitting media signals such as a sound signal, a video image, and the like, with high efficiency and high quality have recently become popular in not only a mobile network but also a broadband network. As methods for compressing and transmitting sound signals with high efficiency and high-quality sound, AMR-NB (Adaptive Multi-Rate Narrow Band) encoding system is used in the mobile network, while CS-ACELP (Conjugate Structure and Algebraic Code Excited Linear Prediction) encoding system such as ITU-TG.729 and the like is used in the broadband network. An IP (Internet Protocol) telephone, which has become popular mainly in the broadband network and is to be introduced also into the mobile network, transfers sound data encoded by these encoding systems via an IP network. When the sound data is transferred via the IP network, IETF RFC1889 RTP (Real-Time Transport Protocol) and IETF RFC 3016 AMR payload format is specified as a standard for packetizing the sound data encoded by AMR-NB, for example. Meanwhile, as an image encoding system, H.263 encoding system in compliance with ITU-T standard and MPEG-4 system in compliance with MPEG standard have become popular. Furthermore, ITU-TH.264 (MPEG-4 AVC) system, which has higher encoding-efficiency, is supposed to be introduced. Incidentally, IETF stands for Internet Engineering Task Force. Further, RFC stands for Request For Comments. Still further, ITU stands for International Telecommunication Unison, and MPEG stands for Motion Picture Experts Group.

A method and system for loss improvement by means of packet redundancy is proposed in Patent Document 1. In this method, firstly, (n) packets in which data having real-time performance, such as sound or the like to be transmitted, have been divided into (n), and (n+1) redundant packets configured of the exclusive logical sum of the aforementioned data are transmitted together. Secondary, even when a loss of one packet occurs, the loss packet is reproduced by the exclusive logical sum of the residual (n-1) packets and the redundant packets, thereby reducing the data loss. Moreover, even if two or more packet losses occur between the packets divided into (n) and the redundant (n+1) packets, when receiving any of the packets divided into (n), the packets are decoded at correct time positions.

A lost-data compensation method in packet data communication is proposed in Patent Document 2. In this system, upon performing the packet data communication using a protocol not having a retransmission function but having a sequence number, packet data provided with a plurality of N data pieces that serially continue is generated and transmitted. Additionally, the packet data is received, and it is determined based on the sequence number in the received packet data whether or not the aforementioned packet data is one following the packet data previously received. Subsequently, when a packet loss occurs in which the aforementioned packet data is not the one following the packet data previously received, the data involved in the packet loss is compensated using the data pieces in the received packet data.

A wireless network system is proposed in Patent Document 3. This system is a wireless network system in which a first and a second wireless communication apparatuses perform packet communication via a wireless network. The first wireless communication apparatus executes copy processing with respect to packets to be transmitted to thereby generate a plurality of the same packets, and then transmits the plurality of the same packets to a plurality of different network paths. The second wireless communication apparatus receives the packets from one or a plurality of network paths, and monitors the received packets to thereby discard the packets same as those previously received.
Patent Document 1: Japanese Patent Application Laid-Open No. 2002-261819
Patent Document 2: Japanese Patent Application Laid-Open No. 2003-163714
Patent Document 3: Japanese Patent Application Laid-Open No. 2005-318395

### DISCLOSURE OF THE INVENTION

### PROBLEM TO BE SOLVED BY THE INVENTION

In the above-mentioned media encoding systems, however, when the encoded data is RTP-packetized using RFC3016 or RFC1886 of the IETF standard and is transferred via the IP network, any packet loss generated in the IP network is unavoidable. For example, when a packet loss occurs with respect to sound data compressed and encoded by a sound encoding system, the sound encoded data is lost, for example, in unit of a frame in every 20 ms or in a plurality of frames. As a result, when the sound data including the packet loss is decoded by a reception-side, sound quality is extremely degraded.

In addition, an error concealment means is mounted on the reception-side of the sound encoding system, so that when recognizing the packet loss, the means activates error concealment function to thereby prevent sound break or sound skipping; but the sound encoding system employs a method in which encoding efficiency is improved by use of prediction from past signals, so that the system is basically susceptible to the packet loss or an error, and the error concealment system itself is insufficient. For that reason, there has been a problem that if a packet loss rate exceeds several percents, degradation of sound quality has been detected obviously even when the error concealment function is performed.

Further, there has been a problem that the image encoding system is more affected by the packet loss than the case of the sound encoding system, and when packets including image encoded data are lost, significant image quality degradation occurs especially in a predictive frame at the receiving side (P frame).

The present invention has been made in view of the foregoing problems, and it is an exemplary object to provide a media transmitting/receiving method, a media transmitting method, a media receiving method, a media transmitting/receiving apparatus, a media transmitting apparatus, a media receiving apparatus, a gateway apparatus, and a media server, for preventing degradation of media quality, even when a packet loss occurs in transferring media encoded data by means of packets via the IP network.

### MEANS FOR SOLVING THE PROBLEM

In order to achieve the aforementioned exemplary object, a first media transmitting/receiving method in accordance with an exemplary aspect of the present invention is a media transmitting/receiving method for performing communication between a transmitting apparatus and a receiving apparatus, which is characterized by including an encoding step of dividing, by the transmitting apparatus, an inputted signal into frames having a predetermined length, and encoding each of the frames to thereby create encoded data, a redundant data generating step of generating, by the transmitting apparatus, redundant data with respect to the encoded data, a packet storing step of storing, by the transmitting apparatus, the encoded data and the redundant data in one packet, a connection call processing step of notifying, by the transmitting apparatus, a setting of at least one of encoding bit rates of the encoded data and the redundant data to the receiving apparatus using connection call processing, a packet transmitting step of transmitting, by the transmitting apparatus, the packet to the receiving apparatus, a packet receiving step of receiving, by the receiving apparatus, the packet transmitted from the transmitting apparatus, a data separating step of separating, by the receiving apparatus, the encoded data and the redundant data stored in the packet based on the setting of the encoding bit rate exchanged between the transmitting apparatus and the receiving apparatus, a data compensating step of compensating, by the receiving apparatus, for loss of the encoded data with the redundant data if the loss occurs during transmission of the packet, and a decoding step of decoding, by the receiving apparatus, at least one of the encoded data and the redundant data based on the setting of the encoding bit rate exchanged between the transmitting apparatus and the receiving apparatus.

A second media transmitting/receiving method in accordance with an exemplary aspect of the present invention is **characterized in that,** in the first media transmitting/receiving method of the present invention, the signal includes at least one of a sound signal and an image signal.

The second media transmitting/receiving method of the present invention is **characterized in that,** in the first media transmitting/receiving method of the present invention, the transmitting apparatus stores a plurality of pieces of the redundant data in the packet and transmits them.

A third media transmitting/receiving method in accordance with an exemplary aspect of the present invention is **characterized in that,** in the first media transmitting/receiving method of the present invention, the transmitting apparatus stores a plurality of pieces of the encoded data in the packet and transmits them

A fourth media transmitting/receiving method in accordance with an exemplary aspect of the present invention is **characterized in that,** in the first media transmitting/receiving method of the present invention, the encoding bit rates of the encoded data and the redundant data are different from each other.

A first media transmitting method in accordance with an exemplary aspect of the present invention is a media transmission method of performing communication with a receiving apparatus, which is characterized by including an encoding step of dividing an inputted signal into frames having a predetermined length, and encoding each of the frames to thereby create encoded data, a redundant data generating step of generating redundant data with respect to the encoded data, a packet storing step of storing the encoded data and the redundant data in one packet, a connection call processing step of notifying a setting of at least one of encoding bit rates of the encoded data and the redundant data, to the receiving apparatus using connection call processing, and a packet transmitting step of transmitting the packet to the receiving apparatus.

A second media transmitting method in accordance with an exemplary aspect of the present invention is **characterized in that,** in the first media transmission method of the present invention, the signal includes at least one of a sound signal and an image signal.

A third media transmitting method in accordance with an exemplary aspect of the present invention is **characterized in that,** in the first media transmission method of the present invention, at the packet storing step, a plurality of pieces of the redundant data are stored in the packet.

A fourth media transmitting method in accordance with an exemplary aspect of the present invention is **characterized in that,** in the first media transmission method of the present invention, at the packet storing step, a plurality of pieces of the encoded data are stored.

A fifth media transmitting method in accordance with an exemplary aspect of the present invention is **characterized in that,** in the first media transmitting method of the present invention, the encoding bit rates of the encoded data and the redundant data are different from each other.

A first media receiving method in accordance with an exemplary aspect of the present invention is a media reception method of performing communication with a transmitting apparatus, which is characterized by including a packet receiving step of receiving a packet transmitted from the transmitting apparatus, a data separating step of separating the encoded data and the redundant data stored in the packet based on a setting of an encoding bit rate exchanged with the transmitting apparatus, a data compensating step of compensating for loss of the encoded data with the redundant data if the loss occurs during transmission of the packet, and a decoding step of decoding at least one of the encoded data and the redundant data based on the setting of the encoding bit rate exchanged with the transmitting apparatus.

A second media receiving method in accordance with an exemplary aspect of the present invention is **characterized in that,** in the first media receiving method of the present invention, the encoded data is data in which either a sound signal or an image signal is encoded.

A third media receiving method in accordance with an exemplary aspect of the present invention is **characterized in that,** in the first media reception method of the present invention, the encoding bit rates of the encoded data and the redundant data are different from each other.

A first media transmitting/receiving apparatus in accordance with an exemplary aspect of the present invention is a media transmitting/receiving apparatus, comprising an encoding unit that divides an inputted signal into frames having a predetermined length and creates encoded data in which each of the frames is encoded, a redundant data generating unit that generates redundant data with respect to the encoded data, and a data transmitting/receiving unit that transmits and receiving packets in which the encoded data and the redundant data are stored in one packet, which is characterized by including a connection call processing unit that exchanges settings of the encoded data and the redundant data stored in each of the packets, and a setting of at least one of encoding bit rates of the encoding unit and the redundant data generating unit, between the media transmitting/receiving apparatuses, and a decoding unit that decodes at least one of the encoded data and the redundant data based on the setting of the encoding bit rate exchanged between the media transmitting/receiving apparatuses, wherein the data transmitting/receiving unit separates the encoded data and the redundant data stored in the packet based on the settings of the data stored in the packet exchanged between the media transmitting/receiving apparatuses, and compensates for loss of the encoded data with the redundant data if the loss occurs during transmission of the packet.

A second media transmitting/receiving apparatus in accordance with an exemplary aspect of the present invention is **characterized in that,** in the first media transmitting/receiving apparatus of the present invention, the signal includes at least one of a sound signal and an image signal.

A third media transmitting/receiving apparatus in accordance with an exemplary aspect of the present invention is **characterized in that,** in the first media transmitting/receiving apparatus of the present invention, the data transmitting/receiving unit stores a plurality of pieces of the redundant data in each the packets and transmits them.

A fourth media transmitting/receiving apparatus in accordance with an exemplary aspect of the present invention is **characterized in that,** in the first media transmitting/receiving apparatus of the present invention, the data transmitting/receiving unit stores a plurality of pieces of the encoded data in each of the packets and transmits them.

A fifth media transmitting/receiving apparatus in accordance with an exemplary aspect of the present invention is **characterized in that,** in the first media transmitting/receiving apparatus of the present invention, the encoding bit rates for encoding the data in the encoding unit and the redundant data generating unit are different from each other.

A first media transmitting apparatus in accordance with an exemplary aspect of the present invention is a media transmitting apparatus of performing communication with a receiving apparatus, which is characterized by including encoding means for dividing an inputted signal into frames having a predetermined length, and encoding each of the frames to thereby create encoded data, redundant data generating means for generating redundant data with respect to the encoded data, packet storing means for storing the encoded data and the redundant data in one packet, connection call processing means for notifying a setting of at least one of encoding bit rates of the encoded data and the redundant data, to the receiving apparatus using connection call processing, and packet transmitting means for transmitting the packet to the receiving apparatus.

A second media transmitting apparatus in accordance with an exemplary aspect of the present invention is **characterized in that,** in the first media transmitting apparatus of the present invention, the signal is either a sound signal or an image signal.

A third media transmitting apparatus in accordance with an exemplary aspect of the present invention is **characterized in that,** in the first media transmitting apparatus of the present invention, the packet storing means stores a plurality of pieces of the redundant data in the packet.

A fourth media transmitting apparatus in accordance with an exemplary aspect of the present invention is **characterized in that,** in the first media transmitting apparatus of the present invention, the packet storing means stores a plurality of pieces of the encoded data in the packet.

A fifth media transmitting apparatus in accordance with an exemplary aspect of the present invention is **characterized in that,** in the first media transmitting apparatus of the present invention, the encoding bit rates of the encoded data and the redundant data are different from each other.

A first media receiving apparatus in accordance with an exemplary aspect of the present invention is a media receiving apparatus of performing communication with a transmitting apparatus, which is characterized by including packet receiving means for receiving a packet transmitted from the transmitting apparatus, data separating means for separating the encoded data and the redundant data stored in the packet based on the setting of the encoding bit rate exchanged with the transmitting apparatus, data compensating means for compensating for loss of the encoded data with the redundant data if the loss occurs during transmission of the packet, and decoding means for decoding at least one of the encoded data and the redundant data based on the setting of the encoding bit rate exchanged with the transmitting apparatus.

A second media receiving apparatus in accordance with an exemplary aspect of the present invention is **characterized in that,** in the first media receiving apparatus of the present invention, the encoded data is data in which either a sound signal or an image signal is encoded.

A third media receiving apparatus in accordance with an exemplary aspect of the present invention is **characterized in that,** in the first media receiving apparatus of the present invention, the encoding bit rates of the encoded data and the redundant data are different from each other.

A gateway apparatus in accordance with an exemplary aspect of the present invention is characterized by including any of the media transmitting/receiving apparatus of any one of the first to fifth present inventions, the media transmitting apparatus of any one of the first to fifth present inventions, and the media receiving apparatus of any one of the first to third present inventions.

A media server in accordance with an exemplary aspect of the present invention is characterized by including any of the media transmitting/receiving apparatus of any one of the first to fifth present inventions, the media transmitting apparatus of any one of the first to fifth present inventions, and the media receiving apparatus of any one of the first to third present inventions.

### EFFECT OF THE INVENTION

The present invention can prevent degradation of the media quality even when the packet loss occurs in transferring media encoded data in the packets via the IP network.

### BEST MODE(S) FOR CARRYING OUT THE INVENTION

First, a configuration and an operation of a media transmitting/receiving apparatus in accordance with a first exemplary embodiment will be described.

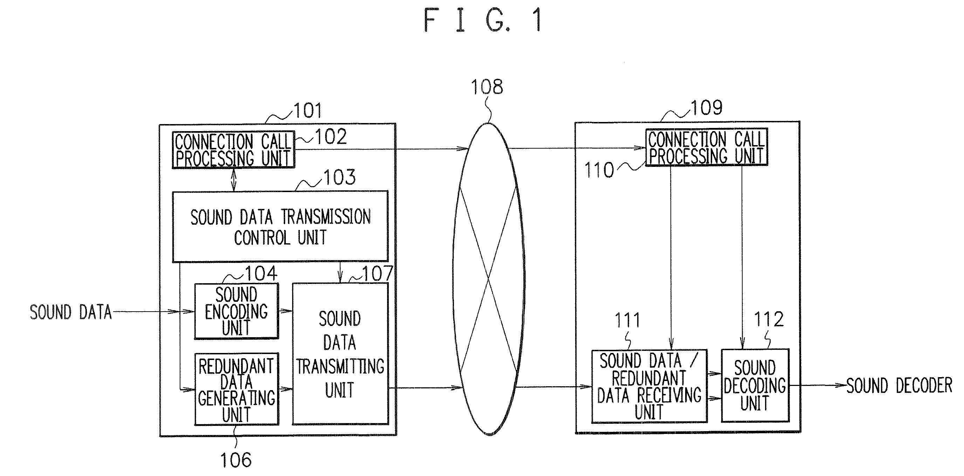

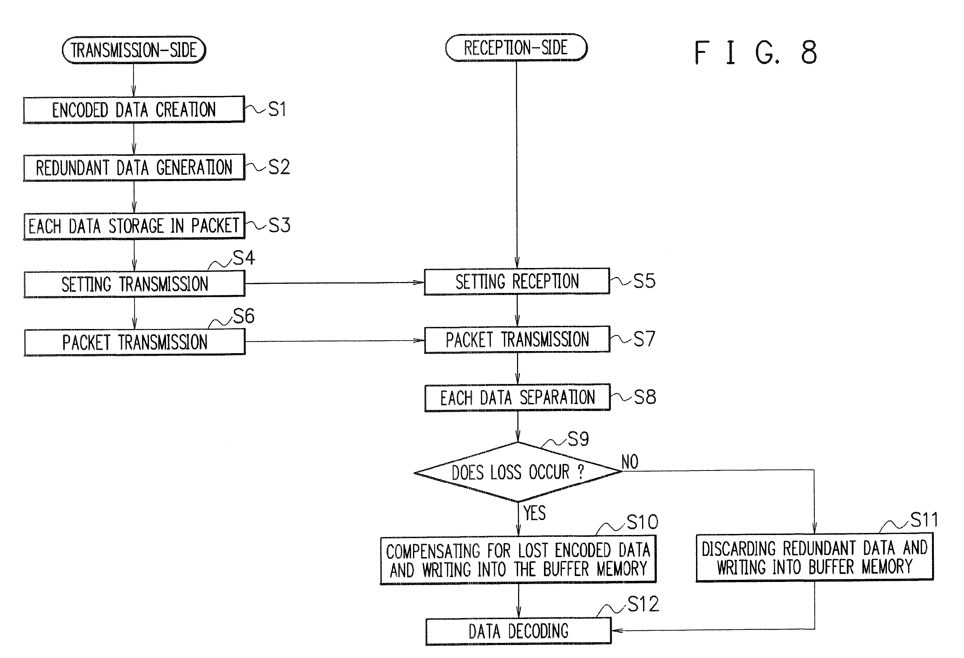

Fig. 1 is a view showing the system configuration of the media transmitting/receiving apparatus in accordance with the exemplary embodiment. Fig. 8 is a view showing the operation of the media transmitting/receiving apparatus (a transmission-side and a reception-side) in accordance with the exemplary embodiment. It is to be noted that although an example in which a sound signal is treated as a media signal is shown in the exemplary embodiment, the present invention is not limited thereto. For example, it may be an image signal, or may be a signal including at least any one of a sound signal and an image signal (static image and moving image).

In Fig. 1, sound transmitting/receiving apparatuses 101 and 109 include both of a sound data transmitting unit and a sound data receiving unit, respectively, but for simplification purposes, only the sound transmitting unit is shown in the sound transmitting/receiving apparatus 101 and only the sound receiving unit is shown in the sound transmitting/receiving apparatus 109. Accordingly, in the following description, the sound transmitting/receiving apparatus 101 and the sound transmitting/receiving apparatus 109 will be described as a transmission-side and a reception-side, respectively. In addition, the sound transmitting/receiving apparatus 101 may be configured so as to include a sound decoding unit. In the exemplary embodiment, the sound transmitting/receiving apparatuses 101 and 109 are connected to a transmission path 108 of an IP (Internet Protocol) network. Further, although an IP transmission protocol will be described as RTP (Real-time Transport Protocol)/UDP (User Datagram Protocol)/IP, the transmission protocol is not limited to RTP/UDP.

The sound transmitting/receiving apparatus 101 divides an inputted sound signal into individual frames by a sound encoding unit 104, and encodes each of the frames to thereby create sound encoded data (Step S1 in Fig. 8). Here, the well-known system such as AMR-NB or the like can be used as a sound encoding system. A frame length results in 20 milliseconds in the case of AMR-NB, but in the case of other encoding systems, a unique frame length or a predetermined frame length is used for the other encoding system.

A redundant data generating unit 106 generates redundant data with respect to the inputted sound signal or sound encoded data (Step S2 in Fig. 8). Various configurations can be considered as the generation of the redundant data. There are, for example, a method of using the same data as the sound encoded data created by the sound encoding unit 104 as the redundant data; a method of using the sound signal encoded with a bit rate lower than that of the sound encoded data as the redundant data; a method of shifting a frame timing between the sound encoded data and the redundant data; and the like.

Here, these settings may be set previously, or may be notified from the transmission-side to the reception-side, or from the reception-side to the transmission-side using after-mentioned connection call processing.

A sound data transmitting unit 107 stores at least one sound encoded data (at least one frame) and at least one redundant data (at least one frame) in the same RTP/UDP packet (Step S3 in Fig. 8). Here, settings of the number of frames of the sound data and the number of frames of the redundant data, a setting of the temporal shift amount between the sound data and the redundant data, and the like may be set previously, or may be set by the after-mentioned connection call processing.

When using the configuration in which the aforementioned settings are exchanged between the transmission-side and the reception-side using the connection call processing, a connection call processing unit 102 notifies the aforementioned settings to the sound transmitting/receiving apparatus 109 (Step S4 in Fig. 8). As the method of notifying the aforementioned settings, there is, for example, a method of notifying them using SDP (Session Description Protocol). Contents of SDP may be known by referring to IETF RFC2327 and the like. Other well-known methods may be used for it other than SDP. For example, the aforementioned settings may be notified while adding a unique description to an RTP payload formatted header (a standard specification of the RTP payload format in the case of AMR is RFC3267).

When the contents of the aforementioned setting are notified from the connection call processing unit 102, the sound data transmission controlling unit 103 instructs to the sound encoding unit 104 and the redundant data generating unit 106 how many frames of the redundant data are to be generated with respect to the data of one frame of the sound. Further, it instructs to the sound data transmitting unit 107 how many frames of the redundant data are to be added to one frame of the sound and how those turns are to be arranged.

In addition, it may be configured so as to perform the connection call processing from a connection call processing unit 110 of the sound transmitting/receiving apparatus 109 on the reception-side to the connection call processing unit 102 of the sound transmitting/receiving apparatus 101 on the transmission-side.

Upon starting a call connection, the connection call processing unit 110 of the sound transmitting/receiving apparatus 109 receives a notice about the aforementioned settings and the like from the connection call processing unit 102 (Step S5 in Fig. 8), and outputs setting values (setting information: information for indicating the contents of the setting) to a sound data/redundant data receiving unit 111 and a sound decoding unit 112.

When the packet is transmitted via the transmission path 108 from the sound data transmitting unit 107 of the sound transmitting/receiving apparatus 101 (Step S6 in Fig. 8), the sound data/redundant data receiving unit 111 receives the packet from the transmission path 108 (Step S7 in Fig. 8), receives the setting information from the connection call processing unit 110, and separates the sound data and the redundant data from the packet based on the setting information (Step S8 in Fig. 8). In addition, the sound data/redundant data receiving unit 111 includes a buffer memory inside, and writes the separated sound data and redundant data in the buffer memory. Writing processing in the buffer memory is performed as follows.

Here, for example, one frame of the sound data and one frame of the redundant data shall be stored in the packets, respectively, and these shall be transmitted while being shifted by one frame. In this case, the sound data of an Nth frame and the redundant data of an (N-1)th frame are received. For example, if a packet loss occurs at the time of one frame before the current time and the packet cannot be received (Step S9/YES in Fig. 8), it results in that the sound data of the (N-1)th frame and the redundant data of an (N-2)th frame cannot be received. Consequently, the sound data that have been lost (sound data of the (N-1)th frame) are compensated with the redundant data of the (N-1)th frame received at present, and the redundant data of the (N-1)th frame and the sound data of the Nth frame are inputted into the buffer (Step S10 in Fig. 8). If both of the packet of one previous frame and the packet at present are able to be received correctly without occurring the packet loss (Step S9/NO in Fig. 8), the redundant data of the (N-1)th frame is discarded, and the sound data of the Nth frame is written in the buffer memory (Step S11 in Fig. 8). After the processing described above, the data written in the buffer memory is outputted to the sound decoding unit 112.

The sound decoding unit 112 receives the data written in the buffer memory by the sound data/redundant data receiving unit 111, and outputs it to a sound decoder (sound decoder) for every frame in order, and the sound decoder decodes the data, and calculates and outputs a reproduced sound signal (Step S12 in Fig. 8).

Next, a configuration and an operation of a media transmitting/receiving apparatus in accordance with a second exemplary embodiment will be described.

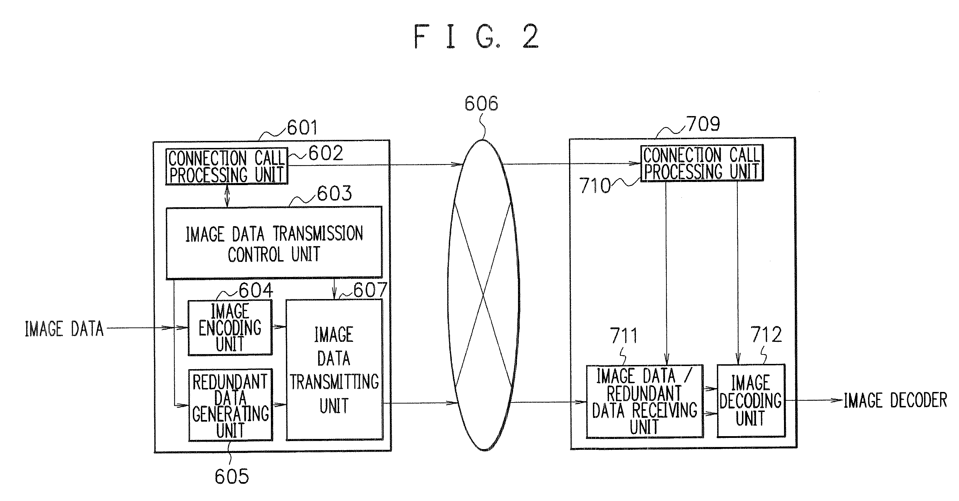

Fig. 2 is a view showing the system configuration of the media transmitting/receiving apparatus in accordance with the exemplary embodiment. Fig. 8 is a view showing the operation of the media transmitting/receiving apparatus (a transmission-side and a reception-side) in accordance with the exemplary embodiment. It is to be noted that while an example of treating an image signal as a media signal is shown in the exemplary embodiment, it is not limited thereto. For example, it may be a sound signal, or may be a signal including at least one of a sound signal and an image signal (static image and moving image).

Since components denoted by the same reference symbols and numerals as those shown in Fig. 1 operate in a manner similar to those shown in Fig. 1, description thereof will be omitted here. Image transmitting/receiving apparatuses 601 and 709 include both of an image data transmitting unit and an image data receiving unit, respectively, but for simplification purposes, only an image data transmitting unit 607 is shown in the image transmitting/receiving apparatus 601, and only an image data/redundant data receiving unit 711 is shown in the image transmitting/receiving apparatus 709. Accordingly, in the following description, the image transmitting/receiving apparatus 601 and the image transmitting/receiving apparatus 709 will be described as a transmission-side and a reception-side, respectively. In addition, the image transmitting/receiving apparatus 601 may be configured so as to include an image decoding unit. The image transmitting/receiving apparatuses 601 and 709 are connected to the transmission path 108 of an IP (Internet Protocol) network. Further, although the IP transmission protocol will be described as RTP (Real-time Transport Protocol)/UDP (User Datagram Protocol)/IP in the exemplary embodiment, the transmission protocol is not limited to RTP/UDP.

The image transmitting/receiving apparatus 601 encodes inputted image signals by an image encoding unit 604, and creates image encoded data (Step S1 in Fig. 8). Here, the well-known system such as MPEG-4, H.263, H.264, or the like can be used as an image encoding system.

A redundant data generating unit 605 generates redundant data with respect to the inputted image signal or image encoded data (Step S2 in Fig. 8). Various configurations can be considered as the generation of the redundant data. There are, for example, a method of using the same data as the image encoded data created by the image encoding unit 604 as the redundant data; a method of using the image signal encoded with a bit rate lower than that of the image encoded data as the redundant data; a method of shifting a time timing between the image encoded data and the redundant data; and the like. These settings may be set previously, or may be notified from the transmission-side to the reception-side, or from the reception-side to the transmission-side using the after-mentioned connection call processing.

The image data transmitting unit 607 stores at least one image encoded data (for example, at least one video packet) and at least one redundant data (for example, at least one video packet) in the same RTP/UDP packet (Step S3 in Fig. 8). Here, settings of the number of image encoded data (for example, the number of video packets) and the number of redundant data (for example, the number of video packets), a setting of the temporal shift amount between the image encoded data and the redundant data, and the like may be set previously, or may be set by the after-mentioned connection call processing.

When using the configuration in which the aforementioned settings are exchanged between the transmission-side and the reception-side using the connection call processing, a connection call processing unit 602 notifies the aforementioned settings to the image transmitting/receiving apparatus 709 (Step S4 in Fig. 8). As the method of notifying the aforementioned settings, there is, for example, a method of notifying them using SDP. Contents of SDP may be known by referring to IETF RFC2327 and the like. Other well-known methods may be used for it other than SDP. For example, the aforementioned settings may be notified while adding a unique description to the RTP payload formatted header (a standard specification of the RTP payload format in the case of MPEG-4 is RFC3267).

When the contents of the aforementioned settings are notified from the connection call processing unit 602, an image data transmission control unit 603 instructs to the image encoding unit 604 and the redundant data generating unit 605 how many video packets of the redundant data are to be generated with respect to the data of one video packet of the image. Moreover, it instructs to the image data transmitting unit 607 how many packets of the redundant data (redundant packet) are to be added to one video packet of the image and how those turns are to be arranged.

In addition, it may be configured so as to perform the connection call processing from a connection call processing unit 710 in the image transmitting/receiving apparatus 709 on the reception-side to the connection call processing unit 602 of the image transmitting/receiving apparatus 601 on the transmission-side.

Upon starting a call connection, the connection call processing unit 710 of the image transmitting/receiving apparatus 709 receives the notice about the aforementioned settings and the like from the connection call processing unit 602 (Step S5 in Fig. 8), and outputs setting values to the image data/redundant data receiving unit 711 and the image decoding unit 712.

When the packet is transmitted via a transmission path 606 from the image data transmitting unit 607 of the image transmitting/receiving apparatus 601 (Step S6 in Fig. 8), the image data/redundant data receiving unit 711 receives the packet from the transmission path 108 (Step S7 in Fig. 8), and when receiving the setting information from the connection call processing unit 710, it separates the image data and the redundant data from the packet based on the aforementioned setting information (Step S8 in Fig. 8). In addition, the image data/redundant data receiving unit 711 includes a buffer memory inside, and writes the separated image data and redundant data in the buffer memory. Writing to the buffer memory is performed according to a following method.

A case in which, for example, one video packet of the image data and one video packet of the redundant data are stored in the packets, respectively, and these are transmitted while being shifted by one video packet will be described here. The image data/redundant data receiving unit 711 receives Nth video packet data and (N-1)th redundant data.

Subsequently, if a packet loss occurs at the time of one video packet before the current time and the packet cannot be received (Step S9/YES in Fig. 8), it results in that (N-1)th video packet data and (N-2)th redundant data cannot be received. Consequently, the image data that have been lost (image data of the (N-1)th frame) is compensated with the (N-1)th redundant data received at present, and the (N-1)th redundant data and the Nth video packet data are inputted into the buffer (Step S10 in Fig. 8).

meanwhile, both of the packet before one video packet and the packet at present do not cause the packet loss, and if both of the packets can be received correctly (Step S9/NO in Fig. 8), the (N-1)th redundant data is discarded, and only the Nth video packet data (image encoded data) is written in the buffer memory (Step S11 in Fig. 8). Subsequently, the data written in the buffer memory is outputted to the image decoding unit 712.

The image decoding unit 712 receives the data written in the buffer memory by the image data/redundant data receiving unit 711, and outputs it to an image decoder for every video packet in order, and the image decoder decodes the data to thereby output a reproduced image sound signal (Step S12 in Fig. 8).

While the configuration in the case of treating only the image signal has been described in the exemplary embodiment, a similar configuration can be used also in the case of treating both of the sound signal and the image signal, so that description thereof will be omitted here.

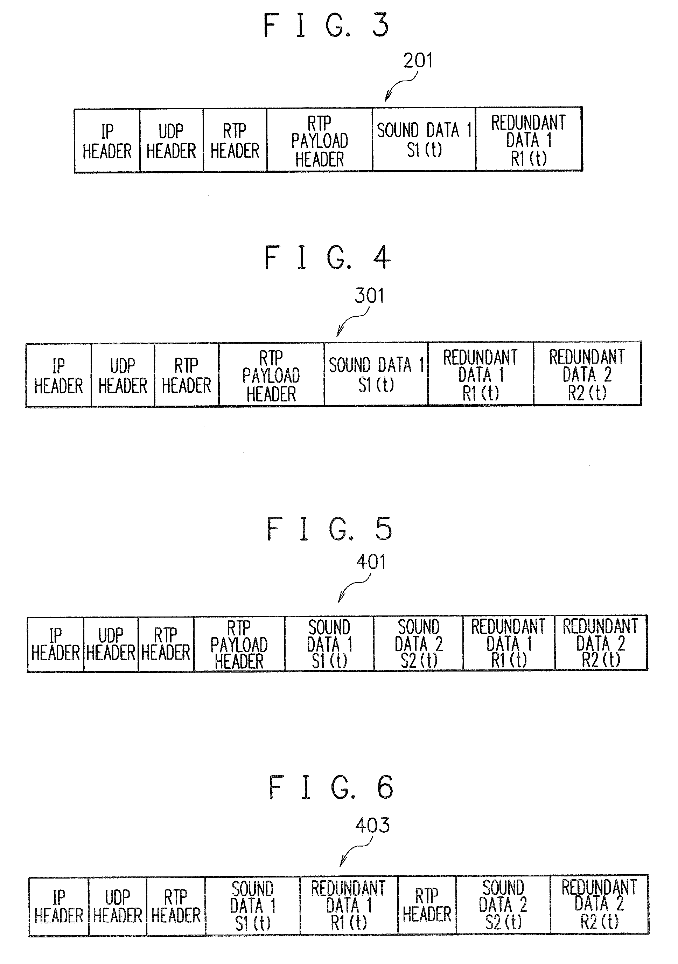

Fig. 3 is a view showing a concrete configuration of RTP payload data in the sound data transmitting unit 107 shown in Fig. 1. It is to be noted that a case where the sound data is added to the RTP payload data is described in Fig. 3, but a configuration similar to that may be used in a case of the image data.

In a packet 201 shown in Fig. 3, the sound data and the redundant data are stored in the same RTP packet. Although a configuration in which one piece of sound encoded data S1(n) (Nth frame) and one piece of redundant data R1(n) ((N-1)th frame) are added to the RTP payload data is shown in Fig. 3, it is also possible to employ a configuration in which a plurality of pieces of sound encoded data and a plurality of pieces of redundant data are added to the RTP payload data.

In a packet 301 shown in Fig. 4, one piece of sound data and a plurality of pieces of redundant data are stored in the same RTP packet. Fig. 4 shows a configuration in which one piece of sound encoded data S1(n) (Nth frame) and two pieces of redundant data R1(n) (for example, (N-1)th frame and (N-2)th frame) are added to the RTP payload data. Incidentally, the number of pieces of redundant data may be two or more. It is to be noted that while a case of the sound data is described in Fig. 4, a configuration similar to that may be used in the case of the image data.

In a packet 401 shown in Fig. 5, a plurality of pieces of sound data and a plurality of pieces of redundant data are stored in the same RTP packet. Fig. 5 shows a configuration in which two pieces of sound encoded data S1(n) (Nth frame and (N+1)th frame) and two pieces of redundant data R1(n) (for example, (N-1)th frame and Nth frame) are added to the RTP payload data. The number of pieces of sound encoded data may be two or more, and the number of pieces of redundant data may be two or more. It is to be noted that while the case of the sound data is described in Fig. 5, the configuration similar to that may be used in the case of the image data.

Fig. 6 is a view showing one example of an arrangement of the RTP payload data in the RTP packet. Fig. 6 shows an example when a plurality of RTP packets shown in Fig. 3 are collected and stored in one UDP packet. It is to be noted that while an example in which two RTP packets are stored in one UDP is shown in Fig. 6, two or more RTP packets may be stored in one UDP. Furthermore, the RTP packets may be a combination of the RTP packets shown in Fig. 3 and Fig. 4, a combination of the RTP packets shown in Fig. 3 and Fig. 5, and a combination of the RTP packets shown in Fig. 4 and Fig. 5. It is to be noted that while the case of the sound data is described in Fig. 6, the configuration similar to that may be used in the case of the image data.

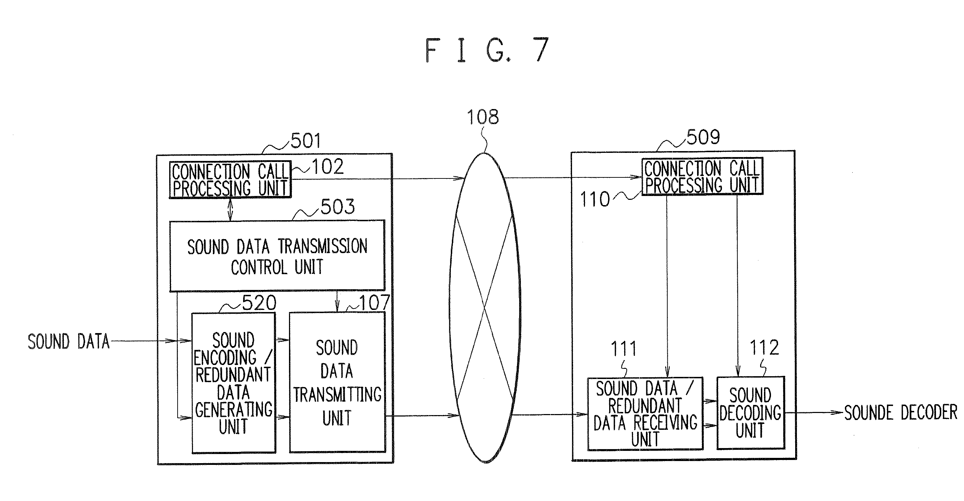

Fig. 7 is a view showing a configuration in which the media transmitting/receiving apparatus in accordance with the exemplary embodiment described above is applied to a media server apparatus or a gateway apparatus. While a case of transmitting/receiving the sound data is described in Fig. 7, a configuration similar to that may be used in the case of the image data.

The media server apparatus or the gateway apparatus outputs the inputted sound signal from the sound data transmitting unit 107 to an IP network 108 as the packet. In Fig. 7, symbol 501 represents the media server apparatus or the gateway apparatus. A sound signal or an encoded bit stream is inputted into the media server apparatus or gateway apparatus 501.

The media server apparatus or gateway apparatus 501 then outputs an encoded bit stream in which the sound signal is encoded, or an encoded bit stream. A sound encoding/redundant data generating unit 520 copies the encoded bit stream to create redundant data, or it once decodes the encoded bit stream, and then re-encodes it with a different bit rate to create and output redundant data.

When the contents of the aforementioned setting are notified from the connection call processing unit 102, a sound data transmission controlling unit 503 instructs to the sound encoding/redundant data generating unit 520 how many frames of the redundant data are to be generated with respect to the data of one frame of the sound. Moreover, it instructs to the sound data transmitting unit 107 how many frames of the redundant data (redundant frame) are to be added for one frame of the sound and how those turns are to be arranged.

Symbol 509 represents a terminal for receiving a broadcast of media, and the terminal is connected to the media server apparatus or gateway apparatus 501. In Fig. 7, components denoted by the same number as that shown in Fig. 1 perform the same operation as that shown in Fig. 1, and thus description thereof will be omitted here. It is to be noted that the configuration is similar to that also in a case of treating only the image signal, and a case of treating both of the sound signal and the image signal.

According to the above-mentioned configuration, it is possible in transmission/reception of the media data to prevent degradation of media quality resulting from the packet loss in the IP network. Moreover, an increase in the amount of operation required in the media transmitting/receiving apparatus can be prevented, and the above-described effect can be obtained.

Although the exemplary embodiments of the present invention have been described above, the present invention is not limited to above exemplary embodiments, and various modifications can be made without departing from the scope of the invention.

For example, the control operation in the aforementioned exemplary embodiment can be executed by hardware, software, or a composite structure of both of them. It is to be noted that when the processing by the software is executed, it is possible to install a program that records a processing sequence, in a memory within a computer incorporated into a dedicated hardware and cause the computer to execute the program, or alternatively, to install a program in a general purpose computer that can execute various processing and cause the computer execute the program.

This program can be previously recorded on, for example, a hard disk or a ROW (Read Only Memory) serving as a recording medium. Alternatively, the program can be stored (recorded) temporarily or permanently in a removable recording media, such as a floppy (registered trademark) disk, a CD-ROM (Compact Disc Read Only Memory), MO (Magneto Optical) disk, a DVD (Digital Versatile Disc), a magnetic disk, or a semiconductor memory. Such a removable recording medium can be provided as so-called packaged software. Incidentally, the program can be wirelessly transferred from a download site to the computer, or transferred by wire to the computer via networks, such as LAN (Local Area Network) and the Internet, and the computer can receive the transferred program, so that it is possible to install the program in the incorporated recording media, such as the hard disk or the like, other than installing the program in the computer from the aforementioned removable recording medium.

Moreover, it is also possible to build the program so as not only to be serially executed according to the processing operation described in the aforementioned exemplary embodiments, but also to be executed in parallel or individually according to the throughput of the apparatus for executing the processing, or as required.

A media transmitting/receiving system including the media transmitting/receiving apparatus on the transmission-side and the media transmitting/receiving apparatus on the reception-side described in the aforementioned exemplary embodiments can also be built so that it may be a logical set configuration of a plurality of apparatuses, or functions of respective devices may mixedly exist.

This application is based upon and claims the benefit of priority from Japanese patent application No. 2006-333708, filed on December 11, 2006, the disclosure of which is incorporated herein in its entirety by reference.

### BRIEF DESCRIPTION OF THE DRAWINGS

Fig. 1 is a block diagram showing a system configuration of a media transmitting/receiving apparatus in accordance with a first exemplary embodiment;
Fig. 2 is a block diagram showing a system configuration of a media transmitting/receiving apparatus in accordance with a second exemplary embodiment;
Fig. 3 is a view showing a configuration of an RTP packet added to RTP payload data that is transmitted and received between the media transmitting/receiving apparatuses in accordance with the exemplary embodiment;
Fig. 4 is a view showing a configuration of an RTP packet added to RTP payload data that is transmitted and received between the media transmitting/receiving apparatuses in accordance with the exemplary embodiment;
Fig. 5 is a view showing a configuration of an RTP packet added to RTP payload data that is transmitted and received between the media transmitting/receiving apparatuses in accordance with the exemplary embodiment;
Fig. 6 is a view showing a configuration of an RTP packet added to RTP payload data that is transmitted and received between the media transmitting/receiving apparatuses in accordance with the exemplary embodiment;
Fig. 7 is a block diagram showing a configuration when the media transmitting/receiving apparatus in accordance with the exemplary embodiment is mounted in a media server apparatus or a gateway apparatus; and
Fig. 8 is a sequence diagram showing an operation of the media transmitting/receiving apparatuses (transmission-side and reception-side) in accordance with the exemplary embodiment.

### DESCRIPTION OF SYMBOLS

101, 109 Media transmitting/receiving apparatus
102, 110 Connection processing unit
103 Sound data transmission control unit
104 Sound encoding unit
105 Redundant data generating unit
106 Sound data transmitting unit
107 IP network
111 Sound data/redundant data receiving unit
112 Sound decoding unit

## Claims

1. A media transmitting/receiving method of performing communication between a transmitting apparatus and a receiving apparatus, the media transmitting/receiving method, comprising:
an encoding step of dividing, by the transmitting apparatus, an inputted signal into frames having a predetermined length, and encoding each of the frames to thereby create encoded data;
a redundant data generating step of generating, by the transmitting apparatus, redundant data with respect to the encoded data;
a packet storing step of storing, by the transmitting apparatus, the encoded data and the redundant data in one packet;
a connection call processing step of notifying, by the transmitting apparatus, a setting of at least one of encoding bit rates of the encoded data and the redundant data to the receiving apparatus using connection call processing;
a packet transmitting step of transmitting, by the transmitting apparatus, the packet to the receiving apparatus;
a packet receiving step of receiving, by the receiving apparatus, the packet transmitted from the transmitting apparatus;
a data separating step of separating, by the receiving apparatus, the encoded data and the redundant data stored in the packet based on the setting of the encoding bit rate exchanged between the transmitting apparatus and the receiving apparatus;
a data compensating step of compensating, by the receiving apparatus, for loss of the encoded data with the redundant data if the loss occurs during transmission of the packet; and
a decoding step of decoding, by the receiving apparatus, at least one of the encoded data and the redundant data based on the setting of the encoding bit rate exchanged between the transmitting apparatus and the receiving apparatus.

2. The media transmitting/receiving method according to claim 1, wherein the signal includes at least one of a sound signal and an image signal.

3. The media transmitting/receiving method according to claim 1, wherein the transmitting apparatus stores a plurality of pieces of the redundant data in the packet and transmits them.

4. The media transmitting/receiving method according to claim 1, wherein the transmitting apparatus stores a plurality of pieces of the encoded data in the packet and transmits them.

5. The media transmitting/receiving method according to claim 1, wherein the encoding bit rates of the encoded data and the redundant data are different from each other.

6. A media transmitting method of performing communication with a receiving apparatus, the media transmitting method, comprising:
an encoding step of dividing an inputted signal into frames having a predetermined length, and encoding each of the frames to thereby create encoded data;
a redundant data generating step of generating redundant data with respect to the encoded data;
a packet storing step of storing the encoded data and the redundant data in one packet;
a connection call processing step of notifying a setting of at least one of encoding bit rates of the encoded data and the redundant data, to the receiving apparatus using connection call processing; and
a packet transmitting step of transmitting the packet to the receiving apparatus.

7. The media transmitting method according to claim 6, wherein the signal includes at least one of a sound signal and an image signal.

8. The media transmitting method according to claim 6, wherein at the packet storing step, a plurality of pieces of the redundant data are stored in the packet.

9. The media transmitting method according to claim 6, wherein at the packet storing step, a plurality of pieces of the encoded data are stored.

10. The media transmitting method according to claim 6, wherein the encoding bit rates of the encoded data and the redundant data are different from each other.

11. A media receiving method of performing communication with a transmitting apparatus, the media receiving method, comprising:
a packet receiving step of receiving a packet transmitted from the transmitting apparatus;
a data separating step of separating the encoded data and the redundant data stored in the packet based on a setting of an encoding bit rate exchanged with the transmitting apparatus;
a data compensating step of compensating for loss of the encoded data with the redundant data if the loss occurs during transmission of the packet; and
a decoding step of decoding at least one of the encoded data and the redundant data based on the setting of the encoding bit rate exchanged with the transmitting apparatus.

12. The media receiving method according to claim 11, wherein the encoded data is data in which either a sound signal or an image signal is encoded.

13. The media receiving method according to claim 11, wherein the encoding bit rates of the encoded data and the redundant data are different from each other.

14. A media transmitting/receiving apparatus comprising an encoding unit that divides an inputted signal into frames having a predetermined length and creates encoded data in which each of the frames is encoded, a redundant data generating unit that generates redundant data with respect to the encoded data, and a data transmitting/receiving unit that transmits and receiving packets in which the encoded data and the redundant data are stored in one packet, the media transmitting/receiving apparatus, comprising:
a connection call processing unit that exchanges settings of the encoded data and the redundant data stored in each of the packets, and a setting of at least one of encoding bit rates of the encoding unit and the redundant data generating unit, between the media transmitting/receiving apparatuses; and
a decoding unit that decodes at least one of the encoded data and the redundant data based on the setting of the encoding bit rate exchanged between the media transmitting/receiving apparatuses,
wherein the data transmitting/receiving unit separates the encoded data and the redundant data stored in the packet based on the settings of the data stored in the packet exchanged between the media transmitting/receiving apparatuses, and compensates for loss of the encoded data with the redundant data if the loss occurs during transmission of the packet.

15. The media transmitting/receiving apparatus according to claim 14, wherein the signal includes at least one of a sound signal and an image signal.

16. The media transmitting/receiving apparatus according to claim 14, wherein the data transmitting/receiving unit stores a plurality of pieces of the redundant data in each the packets and transmits them.

17. The media transmitting/receiving apparatus according to claim 14, wherein the data transmitting/receiving unit stores a plurality of pieces of the encoded data in each of the packets and transmits them.

18. The media transmitting/receiving apparatus according to claim 14, wherein the encoding bit rates for encoding the data in the encoding unit and the redundant data generating unit are different from each other.

19. A media transmitting apparatus for performing communication with a receiving apparatus, the media transmitting apparatus, comprising:
encoding means for dividing an inputted signal into frames having a predetermined length, and encoding each of the frames to thereby create encoded data;
redundant data generating means for generating redundant data with respect to the encoded data;
packet storing means for storing the encoded data and the redundant data in one packet;
connection call processing means for notifying a setting of at least one of encoding bit rates of the encoded data and the redundant data, to the receiving apparatus using connection call processing; and
packet transmitting means for transmitting the packet to the receiving apparatus.

20. The media transmitting apparatus according to claim 19, wherein the signal is either a sound signal or an image signal.

21. The media transmitting apparatus according to claim 19, wherein the packet storing means stores a plurality of pieces of the redundant data in the packet.

22. The media transmitting apparatus according to claim 19, wherein the packet storing means stores a plurality of pieces of the encoded data in the packet.

23. The media transmitting apparatus according to claim 19, wherein the encoding bit rates of the encoded data and the redundant data are different from each other.

24. A media receiving apparatus for performing communication with a transmitting apparatus, the media receiving apparatus, comprising:
packet receiving means for receiving a packet transmitted from the transmitting apparatus;
data separating means for separating the encoded data and the redundant data stored in the packet based on the setting of the encoding bit rate exchanged with the transmitting apparatus;
data compensating means for compensating for loss of the encoded data with the redundant data if the loss occurs during transmission of the packet; and
decoding means for decoding at least one of the encoded data and the redundant data based on the setting of the encoding bit rate exchanged with the transmitting apparatus.

25. The media receiving apparatus according to claim 24, wherein the encoded data is data in which either a sound signal or an image signal is encoded.

26. The media receiving apparatus according to claim 24, wherein the encoding bit rates of the encoded data and the redundant data are different from each other.

27. A gateway apparatus, comprising any of the media transmitting/receiving apparatus according to any one of claims 14 to 18, the media transmitting apparatus according to any one of claims 19 to 23, and the media receiving apparatus according to any one of claims 24 to 26.

28. A media server comprising any of the media transmitting/receiving apparatus according to any one of claims 14 to 18, the media transmitting apparatus according to any one of clams 19 to 23, and the media receiving apparatus according to any one of claims 24 to 26.
